**Europäisches Patentamt**

**European Patent Office**

**Office européen des brevets**

(19)

(11) Veröffentlichungsnummer: **0 246 348**
**B1**

# EUROPÄISCHE PATENTSCHRIFT

(12)

(45) Veröffentlichungstag der Patentschrift:
**07.03.90**

(21) Anmeldenummer: **86106961.5**

(22) Anmeldetag: **22.05.86**

(51) Int. Cl.⁴: **G01C 21/16**

(54) **Anordnung in Luftfahrzeugen zur Erzeugung dreifacher Redundanz für wenigstens zwei Achsen im Raum bei der Fluglageregelung und -stabilisierung.**

(43) Veröffentlichungstag der Anmeldung:
**25.11.87 Patentblatt 87/48**

(45) Bekanntmachung des Hinweises auf die Patenterteilung:
**07.03.90 Patentblatt 90/10**

(84) Benannte Vertragsstaaten:
**BE DE FR GB IT NL SE**

(56) Entgegenhaltungen:
**GB-A- 2 021 264**
**US-A- 3 398 586**
**US-A- 3 680 355**

**Die Akte enthält technische Angaben, die nach dem Eingang der Anmeldung eingereicht wurden und die nicht in dieser Patentschrift enthalten sind.**

(73) Patentinhaber: **LITEF GmbH, Lörracher Strasse 18, D-7800 Freiburg/Br.(DE)**

(72) Erfinder: **Hassenpflug, Wolfgang, Reutestrasse 2, D-7800 Freiburg i.Br.(DE)**

(74) Vertreter: **Patentanwälte TER MEER - MÜLLER - STEINMEISTER, Mauerkircherstrasse 45, D-8000 München 80(DE)**

## Beschreibung

Die Erfindung betrifft eine Anordnung in Luftfahrzeugen zur Erzeugung dreifach redundanter Information nach dem Oberbegriff des Patentanspruchs 1.

Zur Stabilisierung und Regelung der Fluglage von Luftfahrzeugen (z.B. Starrflüglern, Drehflüglern und Flugkörpern im allgemeinen) werden primär die um die Hauptachsen des Luftfahrzeugs gemessenen Winkelgeschwindigkeiten herangezogen. Diese Messung kann sowohl durch drei z.B. in Richtung der Hauptachsen des Luftfahrzeugs angeordnete Wendekreisel als auch durch ein Strapdown-Gerät mit drei einachsigen Kreiseln (z.B. Laserkreiseln) oder mit zwei Kreiseln mit je zwei Meßfreiheitsgraden (z.B. DTG = Dry Tuned Gyroscope) erfolgen.

Da die technisch erreichbare Zuverlässigkeit der verwendbaren Geräte im allgemeinen nicht ausreicht, werden diese Meßgeräte mehrfach redundant eingesetzt, um die Zuverlässigkeit, bzw. die Ausfallwahrscheinlichkeit zu verringern (zu erhöhen). Dabei ist jedoch zu berücksichtigen, daß das eventuelle Fehlverhalten eines der redundant angeordneten Meßgeräte bestimmbar sein muß. Erst wenn mindestens drei entsprechende Meßwerte vorliegen, kann in einem Rechen- und Entscheidungsprozeß eine Mehrheitsentscheidung (majority voting) durchgeführt werden.

Da die simple mehrfachredundante Anordnung das Gewicht und die Kosten jedoch hochtreibt, gibt es bereits Vorschläge, bei denen entweder zwei Strapdown-Geräte unter einem Winkel $\alpha \neq$ n ½ π mit n = 1, 2, ... angeordnet sind (vgl. Sebring, Young 1984, "Application of Multifunction No. 133, Advances in Strapdown Inertial Systems). Ein anderer Vorschlag geht dahin, einen Sensorblock in einem Strapdown-System mit mehr Kreiseln in nichtorthogonaler Anordnung zu bestücken, als minimal für die Messung um drei Achsen des Raums erforderlich sind (vgl. Keller 1979, "Über redundante Strapdownsensorkonfigurationen der inertialen Ortung und Navigation", Diplomarbeit, TU Berlin 1979).

Die ersterwähnte Anordnung mit zwei gegeneinander versetzten Strapdown-Geräten hat gegenüber der zweitgenannten Anordnung den Vorteil, daß beide Geräte an verschiedenen Orten des Luftfahrzeugs eingebaut werden können und damit neben der hohen Verfügbarkeit der Meßwerte auch die Forderung nach geringer Verwundbarkeit erfüllen. Nachteilig bei der ersten Anordnung ist jedoch die Tatsache, daß die im allgemeinen rechteckigen Geräte wesentlich mehr Platz beanspruchen, da sie nicht parallel, antiparallel oder orthogonal zu den Hauptachsen des Luftfahrzeugs eingebaut werden können. Es sind also besondere konstruktive Maßnahmen im Luftfahrzeug, besondere Einbauvorrichtungen und spezielle Einmeßverfahren erforderlich im Vergleich zu der bisher üblichen Einbauart, bei der die Geräte parallel oder antiparallel zu den Hauptachsen eingebaut werden können.

Nachteilig an der zweiten Art der Geräteauslegung ist, daß die Redundanz im allgemeinen auf die Kreisel selbst mit ihrer jeweiligen Fessel- und Antriebselektronik beschränkt ist, während die notwendige Elektronik des zugeordneten Digitalrechners, die Schnittstellen und die Stromversorgung hinsichtlich der Redundanz unberücksichtigt bleiben, was wegen tatsächlich auftretender Ausfallraten nicht zulässig ist.

In US-A-3 680 355 wird eine Anordnung beschrieben, bei der die redundante Kreiselmeßachse, die durch die Verwendung von je zwei zweiachsigen Kreiseln entsteht, dazu verwendet wird, eine Überwachung der von den beiden Plattformen gemessenen Lagewinkel zu ermöglichen. Eine Vereinfachung der Erzeugung einer Dreifachredundanz für die wichtigsten Achsen eines Luftfahrzeugs ist damit nicht möglich.

Der Erfindung liegt die Aufgabe zugrunde, eine Anordnung in Luftfahrzeugen zur Erzeugung dreifacher Redundanz wenigstens für die beiden wesentlichen flugsicherheitskritischen Achsen mit wesentlich geringerem Aufwand zu ermöglichen, ohne daß besondere Einbauvorrichtungen und/oder räumliche Änderungen im Luftfahrzeug vorgenommen werden müssen.

Ausgehend von der eingangs genannten Anordnung ist die Erfindung dadurch gekennzeichnet, daß die sechs Meßachsen unterschiedlich angeordnet sind, um für jede der beiden horizontalen Achsen im Raum redundante Information durch rechnerische Zuordnung jeweils drei der horizontalen Meßachsen zu der jeweiligen horizontalen Achse erhalten zu können.

Vorteilhafte Weiterbildungen des Erfindungsgedankens sind in abhängigen Patentansprüchen angegeben.

Der Erfindung liegt der Gedanke zugrunde, daß bei der Verwendung von Kreiseln mit zwei Meßfreiheitsgraden pro Strapdown-Gerät vier Meßachsen zur Verfügung stehen, aber bisher nur drei davon benötigt werden. Eine der Meßachsen ist also redundant.

Legt man gemäß der Erfindung die vier Meßachsen so, daß drei der Achsen orthogonal zueinander stehen und die vierte Meßachse unter 45° zu den beiden Horizontalachsen und senkrecht zu der Vertikalen steht, so erhält man ein Achsensystem, in dem man die unter 45° zu den Horizontalachsen stehende Meßachse je nach Einbauort durch Transformation einer beiden Horizontalachsen zuordnen kann, um so mit zwei Strapdown-Geräten je drei Meßwerte für die beiden Horizontalachsen, also die Nick- und die Rollachse, zu erhalten. Bekanntlich sind bei Starrflüglern und Hubschraubern die Nick- und Rollregelkreise besonders kritisch. Die Gierachse ist bei beiden Anwendungen weniger kritisch.

Die Erfindung bietet die technischen und wirtschaftlichen Vorteile, daß

- nur zwei Strapdown-Geräte benötigt werden, die
- parallel, antiparallel oder orthogonal zueinander anzuordnen sind und die
- im Luftfahrzeug zur Verminderung der Verwundbarkeit dislocierbar sind.

Nachfolgend werden unter Bezug auf die Zeichnung beispielhaft zwei Möglichkeiten beschrieben, die erfindungsgemäße Meßachsen-Systemanordnung aufzubauen.

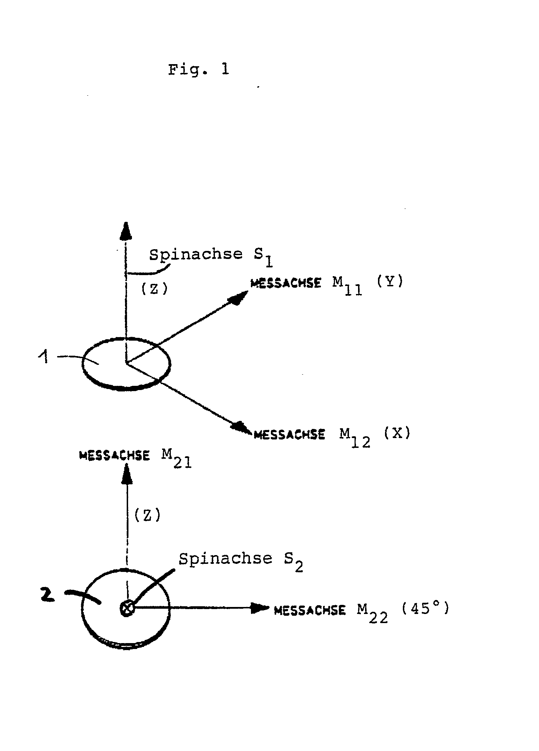

Ordnet man gemäß Fig. 1 zwei DTGs (trocken abgestimmte Kreiselsysteme) so an, daß ihre Spinachsen orthognal zueinander stehen und der eine Kreisel 1 mit seiner Spinachse $S_1$ in Richtung der Gierachse (Z-Achse) des Luftfahrzeugs und die Spinachse $S_2$ des anderen Kreisels 2 in Richtung der Nickachse und eine seiner Meßachsen (z. B. X-Meßachse $M_{21}$) in Richtung der Gierachse zeigen, so erhält man das oben beschriebene Meßachsensystem, wenn dabei noch der Kreisel 1 mit Spinachse $S_1$ in Richtung der Gierachse so angeordnet ist, daß die beiden Meßachsen $M_{11}$, $M_{12}$ dieses Kreisels 1 unter 45° zu der senkrecht zur Gierachse stehenden Meßachse $M_{22}$ des anderen Kreisels 2 stehen.

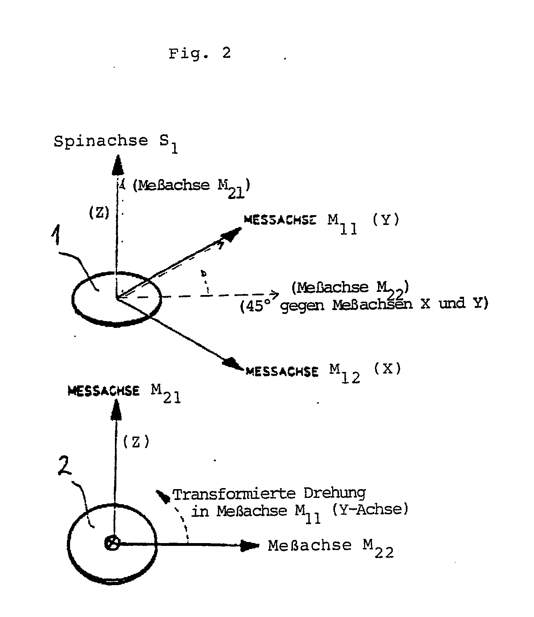

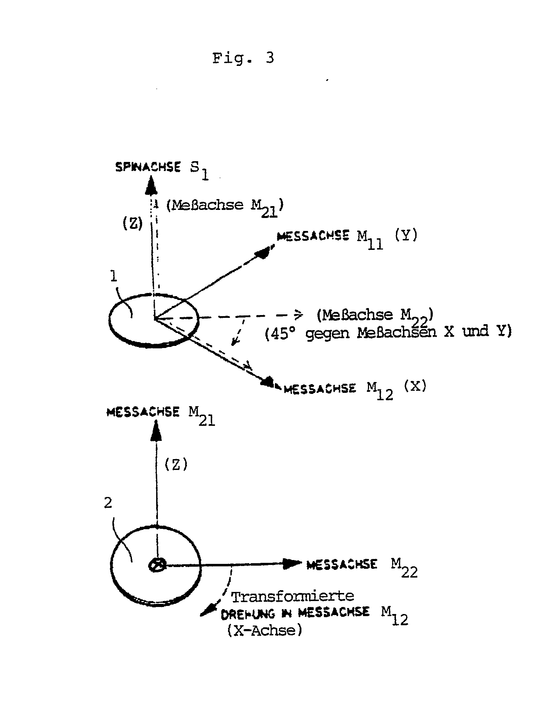

Die Fig. 2 und 3 veranschaulichen die erfindungsgemäß vorgesehene Achsentransformation, wobei in Fig. 2 die Transformation so erfolgt, daß die Y-Meßachse (Meßachse $M_{11}$ in Fig. 1) duplex redundant wird, während in Fig. 3 die entsprechende Transformation für die duplex redundante X-Meßachse (Meßachse $M_{12}$ in Fig. 1) aufgezeigt wird. Die Transformation erfolgt im Rechner durch die entsprechende Transformations-Matrix.

**Patentansprüche**

1. Anordnung in Luftfahrzeugen zur Erzeugung dreifach redundanter Information für eine Bewertung durch Mehrheitsentscheidung für wenigstens zwei horizontale Achsen im Raum mit zwei räumlich starr zueinander fixiert angeordneten Strapdown-Kreiselgeräten mit zwei senkrecht zueinander angeordneten zweiachsigen Kreiseln (1, 2) mit jeweils zwei Meßachsen ($M_{11}$, $M_{12}$, bzw. $M_{21}$, $M_{22}$,), von denen insgesamt sechs Meßachsen in der Horizontalebene angeordnet sind, und mit Geräten zur Stabilisierung und Regelung der Fluglage, dadurch gekennzeichnet, daß die sechs Meßachsen unterschiedlich angeordnet sind, um für jede der beiden horizontalen Achsen im Raum redundante Information durch rechnerische Zuordnung jeweils drei der horizontalen Meßachsen zu der jeweiligen horizontalen Achse erhalten zu können.

2. Anordnung nach Anspruch 1, dadurch gekennzeichnet, daß die beiden Strapdown-Kreiselgeräte disloziert im Luftfahrzeug anordbar sind.

3. Anordnung nach Anspruch 1 oder 2, dadurch gekennzeichnet, daß jedes der beiden Strapdown-Kreiselgeräte zwei trocken abgestimmte Kreisel (1, 2) enthält, die wie folgt angeordnet sind:
- die Spinachse ($S_1$) des einen Kreisels (1) liegt in Richtung der Gierachse des Luftfahrzeuges,
- die Spinachse ($S_2$) des anderen Kreises (2) liegt in Richtung der Nickachse des Luftfahrzeugs,
- eine der Meßachsen ($M_{21}$) des anderen Kreises (2) zeigt in Richtung der Gierachse des Luftfahrzeugs, die beiden orthogonal zueinander stehenden Meßachsen ($M_{11}$, $M_{12}$) des ersten Kreisels (1) stehen unter 45° -Anordnung zu einer Meßachse ($M_{22}$) des anderen Kreisels (2).

4. Anordnung nach Anspruch 1 oder 2, dadurch gekennzeichnet, daß jedes der zwei Strapdown-Kreiselgeräte zwei trocken abgestimmte Kreisel (1, 2) enthält, die wie folgt sind:

- der erste Kreisel (1) ist mit seiner Spinachse ($S_1$) in Richtung der Gierachse des Luftfahrzeugs ausgerichtet,
- der zweite Kreisel (2) steht mit seiner Spinachse ($S_2$) senkrecht zur Spinachse ($S_1$) des ersten Kreisels (1), jedoch unter 45° zur Nick- bzw. Rollachse (interkardinal) des Luftfahrzeugs,
- die eine Meßachse des zweiten Kreisels (2) zeigt in Richtung der Gierachse, und
- die Meßachsen des ersten Kreisels (1) liegen in Richtung der Nick- bzw. Rollachse.

**Claims**

1. Arrangement in aircraft for generating triple redundant information for an assessment by majority decision for at least two horizontal axes in space with two strap-down gyroscope devices which are arranged to be rigidly fixed in space relative to one another, with two two-axis gyroscopes (1, 2) arranged perpendicular to one another with in each instance two measurement axes ($M_{11}$, $M_{12}$, and $M_{21}$, $M_{22}$ respectively), of which a total of six measurement axes are arranged in the horizontal plane, and with systems for stabilising and regulating the flight attitude, characterised in that the six measurement axes are arranged differently, in order to be able to obtain redundant information for each of the two horizontal axes in space by computational allocation of in each instance three of the horizontal measurement axes to the respective horizontal axis.

2. Arrangement according to Claim 1, characterised in that two strap-down gyroscope devices are arranged so that they are separated in the aircraft.

3. Arrangement according to Claim 1 or 2, characterised in that each of the two strap-down gyroscope devices contains two dry tuned gyroscopes (1, 2), which are arranged as follows:
- the spin axis ($S_1$) of one gyroscope (1) is located in the direction of the yaw axis of the aircraft,
- the spin axis ($S_2$) of the other gyroscope (2) is located in the direction of the pitch axis of the aircraft
- one of the measurement axes ($M_{21}$) of the other gyroscope (2) points in the direction of the yaw axis of the aircraft,
- the two measurement axes ($M_{11}$, $M_{12}$) of the first gyroscope (1) located orthogonally to one another are placed in a 45° arrangement to one measurement axis ($M_{22}$) of the other gyroscope (2).

4. Arrangement according to Claim 1 or 2, characterised in that each of the two strap-down gyroscope devices contains two dry tuned gyroscopes (1, 2), which are arranged as follows:
- the first gyroscope (1) is aligned with its spin axis ($S_1$) in the direction of the yaw axis of the aircraft,
- the second gyroscope (2) is placed with its spin axis ($S_2$) at right angles to the spin axis ($S_1$) of the first gyroscope (1) but at 45° to the pitch or roll axis (intercardinal ) of the aircraft,
- one measurement axis of the second gyroscope (2) points in the direction of the yaw axis, and

— the measurement axes of the first gyroscope (1) are located in the direction of the pitch or roll axis.

## Revendications

1. Agencement dans des aéronefs pour la génération d'une information à triple redondance pour une évaluation par décision majoritaire pour au moins deux axes horizontaux dans l'espace, comprenant deux gyroscopes strap-down solidarisés dans l'espace avec deux gyroscopes à deux axes (1, 2) disposés perpendiculairement l'un par rapport à l'autre et comportant chacun deux axes de mesure ($M_{11}$, $M_{12}$ et respectivement $M_{21}$, $M_{22}$) dont un total de six axes de mesure sont placés dans le plan horizontal, et des appareils pour la stabilisation et la commande de l'attitude de vol, caractérisé en ce que les six axes de mesure sont orientés différemment pour pouvoir obtenir pour chacun des deux axes horizontaux dans l'espace une information redondante par association mathématique à chaque fois de trois des axes de mesure horizontaux à un axe horizontal respectif.

2. Agencement selon la revendication 1, caractérisé en ce que les deux gyroscopes strap-down peuvent être montés de manière séparée dans l'aéronef.

3. Agencement selon l'une des revendications 1 ou 2, caractérisé en ce que chacun des deux gyroscopes strap-down comprend deux gyroscopes (1, 2) accordés à sec et disposés de la manière suivante:
   — l'axe de rotation ($S_1$) de l'un des gyroscopes (1) est orienté dans le sens de l'axe de lacet de l'aéronef,
   — l'axe de rotation ($S_2$) de l'autre gyroscope (2) est orienté dans le sens de l'axe de tangage de l'aéronef,
   — l'un des axes de mesure ($M_{21}$) de l'autre gyroscope (2) est orienté dans le sens de l'axe de lacet de l'aéronef,
   — les deux axes de mesure ($M_{11}$, $M_{12}$) du premier gyroscope (1) placés orthogonalement l'un à l'autre forment avec l'un des axes de mesure ($M_{22}$) de l'autre gyroscope (2) un angle de 45°.

4. Agencement selon l'une des revendications 1 ou 2, caractérisé en ce que chacun des deux gyroscopes strap-down comprend deux gyroscopes (1, 2) accordés à sec et disposés de la manière suivante:
   — l'axe de rotation ($S_1$) du premier gyroscope (1) est orienté dans le sens de l'axe de lacet de l'aéronef,
   — l'axe de rotation ($S_2$) du second gyroscope (2) est orienté perpendiculairement à l'axe de rotation ($S_1$) du premier gyroscope (1) mais incliné de 45° par rapport à l'axe de tangage et respectivement de roulis (intercardinal) de l'aéronef
   — l'un des axes de mesure du second gyroscope (2) est orienté dans le sens de l'axe de lacet, et
   — les axes de mesure du premier gyroscope (1) sont orientés dans le sens de l'axe de tangage et respectivement de roulis.

Fig. 1

Fig. 2

Spinachse $S_1$

(Meßachse $M_{21}$)

(Z)

MESSACHSE $M_{11}$ (Y)

(Meßachse $M_{22}$)
($45°$ gegen Meßachsen X und Y)

MESSACHSE $M_{12}$ (X)

MESSACHSE $M_{21}$

(Z)

Transformierte Drehung
in Meßachse $M_{11}$ (Y-Achse)

Meßachse $M_{22}$

Fig. 3